(19) **Europäisches Patentamt European Patent Office Office européen des brevets**

(11) **EP 4 107 652 B1**

(12) **EUROPEAN PATENT SPECIFICATION**

(45) Date of publication and mention of the grant of the patent:
**01.04.2026 Bulletin 2026/14**

(21) Application number: **20919477.8**

(22) Date of filing: **21.02.2020**

(51) International Patent Classification (IPC):
**G06T 7/80** *(2017.01)* **G06V 10/75** *(2022.01)*
**G06V 10/25** *(2022.01)* **G06V 10/62** *(2022.01)*
**G06T 7/593** *(2017.01)*

(52) Cooperative Patent Classification (CPC):
**G06T 7/593; G06V 10/25; G06V 10/62; G06V 10/7515;** G06T 2207/10021; G06T 2207/20084; G06T 2207/30196; G06V 10/759

(86) International application number:
**PCT/CN2020/076191**

(87) International publication number:
**WO 2021/164000 (26.08.2021 Gazette 2021/34)**

(54) **IMAGE PROCESSING METHOD, APPARATUS, DEVICE AND MEDIUM**

BILDVERARBEITUNGSVERFAHREN, GERÄT, VORRICHTUNG UND MEDIUM

PROCÉDÉ, APPAREIL ET DISPOSITIF DE TRAITEMENT D'IMAGE, ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **Harman International Industries, Incorporated Stamford, CT 06901 (US)**

(72) Inventors:
• **ZHANG, Qingshan Shanghai 200072 (CN)**
• **XU, Min Shanghai 200233 (CN)**
• **ZHOU, Rengao Shanghai 200233 (CN)**

(74) Representative: **Westphal, Mussgnug & Partner, Patentanwälte mbB Werinherstraße 79 81541 München (DE)**

(56) References cited:
EP-A1- 3 489 898       EP-A2- 2 838 050
CN-A- 104 915 943      CN-A- 104 918 033
CN-A- 109 089 100      US-A1- 2015 262 365
US-A1- 2017 069 072    US-A1- 2019 206 073
US-A1- 2019 206 073

**Description**

FIELD OF INVENTION

The present disclosure relates to image processing, and more particularly, to an image processing method, an image processing apparatus, an image processing device and a computer-readable storage medium.

BACKGROUND ART

Document US 2019/206073 A1 discloses an aircraft (e.g., unmanned aerial obstacle) detection apparatus. The apparatus performs image collection on a target obstacle by using a binocular camera, to obtain a first image and a second image. After determining a first pixel location obtained by projecting the target obstacle in the first image, and a second pixel location obtained by projecting the target obstacle in the second image, the apparatus calculates a disparity between the first pixel location and the second pixel location and a depth value between the binocular camera and the target obstacle according to the disparity and a preset disparity-to-depth mapping matrix, to detect whether a flight direction of the aircraft is blocked by an obstacle.

Document US 2015/262365 A1 discloses an image processing device including an imaging device and an electronic control unit. The electronic control unit includes a first extraction unit, a disparity calculation unit, a second extraction unit, and an object determination unit. The first extraction unit extracts a main area based on image data captured by the imaging device, the main area being an image area including a candidate for a target. The second extraction unit extracts a candidate area from the main area based on the disparity. The object determination unit determines whether an image of the candidate area is an image of the target. An extraction of the candidate area from a lower part area is restricted more strictly than that from an upper part area. The lower part area is provided below a predetermined position in the main area. The upper part area is provided above the predetermined position in the main area.

With the development of image processing technology, the image processing is widely used in commercial fields. Image processing process is also faced with higher requirements.

Currently, when performing an image processing on an image pair (Such as a pair of images taken with a binocular camera) containing the same target to obtain the spatial coordinate value or attribute characteristics of the target, it usually involves the process of calculating the disparity value of the target in the image pair. Ordinary methods would try to calculate, for each pixel in one image of the image pair, the disparity value between the pixel and the matching pixel thereof in the other image of the image pair. However, this method is not only time-consuming but also unnecessary when only specific targets on the image are concerned.

Therefore, there is a need for an image processing method that can speed up the calculation process, reduce the time consumed by disparity calculation, and significantly reduce the amount of calculation as well as achieving good disparity calculation.

SUMMARY OF THE INVENTION

According to one aspect of the present disclosure, an image processing method is provided. The image processing method includes: performing a target detection on a first image to generate a first to-be-processed image, the first to-be-processed image has a size smaller than the size of the first image; performing the target detection on a second image to generate a second to-be-processed image, the second to-be-processed image has a size smaller than the size of the second image, the first image and the second image constitute an image pair containing the target, and a disparity exists between the first image and second image; calculating, based on the first to-be-processed image and the second to-be-processed image, a disparity value of the target in the first to-be-processed image and the second to-be-processed image. A first target detection box is obtained by performing the target detection on the first image, and a second target detection box is obtained by performing the target detection on the second image, and wherein generating the first to-be-processed image and generating the second to-be-processed image including: determining a region to be processed according to the first target detection box and the second target detection box, wherein the region to be processed includes the first target detection box and the second target detection box; cropping the first image and the second image according to the region to be processed to obtain the first to-be-processed image and the second to-be-processed image.

In one embodiment of the present disclosure, wherein calculating the disparity value of the target in the first to-be-processed image and the second to-be-processed image includes: obtaining, for each pixel of the target in the first to-be-processed image, a matching pixel in the second to-be-processed image that matches the pixel; calculating, for each pixel of the target in the first to-be-processed image, the disparity value between the pixel and the matching pixel thereof, and generating a disparity image; calculating the disparity value of the target based on the disparity image.

**EP 4 107 652 B1**

In another embodiment of the present disclosure, wherein the first image is a current image frame of a first video image, and the second image is a current image frame of a second video image, when the target is not detected in the first image or the second image, an image in which the target is not detected is used as an image to be predicted, and the process of generating the target detection box of the image to be predicted including: obtaining target motion information based on the video image corresponding to the image to be predicted; determining, the target detection box in the image to be predicted according to the target motion information.

In another embodiment of the present disclosure, wherein the target motion information is target motion speed, and wherein determining the target detection box in the image to be predicted according to the target motion information includes: determining the target detection box in the image to be predicted according to the target motion speed and the target detection box in a previous image frame corresponding to the image to be predicted.

In another embodiment of the present disclosure, wherein, obtaining, for each pixel of the target in the first to-be-processed image, the matching pixel in the second to-be-processed image that matches the pixel comprises: determining a maximum disparity threshold and a minimum disparity threshold of the pixel; determining a pixel search region in the second to-be-processed image according to the maximum disparity threshold and the minimum disparity threshold; determining, based on the pixel in the first to-be-processed image and a pixel in the pixel search region, a matching pixel in the second to-be-processed image that matches the pixel.

In another embodiment of the present disclosure, wherein the first image is a current image frame of a first video image, the second image is a current image frame of a second video image, and wherein determining the maximum disparity threshold and the minimum disparity threshold of the pixel comprises: obtaining the disparity value of the target in at least one pair of historical image frames of the first video image and the second video image; determining the maximum disparity threshold and the minimum disparity threshold of the pixel according to the disparity value of the target in the at least one pair of historical image frames.

In another embodiment of the present disclosure, wherein calculating, for each pixel of the target in the first to-be-processed image, the disparity value between the pixel and the matching pixel thereof, and generating the disparity image comprises: for each pixel of the target in the first to-be-processed image, calculating vector-distance between the pixel in the first to-be-processed image and the matching pixel in the second to-be-processed image of the pixel in the first to-be-processed image, and using the vector-distance as the disparity value of the pixel; setting the pixel value of the pixel as the disparity value of the pixel, and obtaining the disparity image.

In another embodiment of the present disclosure, wherein calculating the disparity value of the target based on the disparity image comprises: weighting and summing the pixel value of each pixel in the disparity image to obtain the disparity value of the target.

In another embodiment of the present disclosure, the method further comprising: calculating a spatial coordinate value of the target according to the disparity value of the target in the first to-be-processed image and the second to-be-processed image.

According to an aspect of the present disclosure, there is provided an image processing apparatus, comprising: a first to-be-processed image generation module, which is configured to perform a target detection on a first image to generate a first to-be-processed image, the first to-be-processed image has a size smaller than the size of the first image; a second to-be-processed image generation module, which is configured to perform the target detection on a second image to generate a second to-be-processed image, the second to-be-processed image has the size smaller than the size of the second image, the first image and the second image constitute an image pair containing the target, and a disparity exists between the first image and second image; a target disparity value calculation module configured to calculate, based on the first to-be-processed image and the second to-be-processed image, a disparity value of the target in the first to-be-processed image and the second to-be-processed image. A first target detection box is obtained by performing the target detection on the first image, and a second target detection box is obtained by performing the target detection on the second image, and wherein the apparatus further comprises: a region to be processed determination module, which is configured to determine a region to be processed according to the first target detection box and the second target detection box, wherein the region to be processed comprises the first target detection box and the second target detection box; an image segmentation module, which is configured to crop the first image and the second image according to the region to be processed to obtain the first to-be-processed image and the second to-be-processed image

In an embodiment of the present disclosure, wherein the target disparity value calculation module comprises: a pixel matching module, which is configured to obtain, for each pixel of the target in the first to-be-processed image, a matching pixel in the second to-be-processed image that matches the pixel; a disparity image generation module, which is configured to calculate, for each pixel of the target in the first to-be-processed image, the disparity value between the pixel and the matching pixel point thereof, and generating a disparity image; a target disparity value generation module, which is configured to calculate the disparity value of the target based on the disparity image.

In another embodiment of the present disclosure, wherein the first image is a current image frame of a first video image, and the second image is a current image frame of a second video image, when the target is not detected in the first image or the second image, an image in which the target is not detected is used as an image to be predicted, and the

3

apparatus further comprises: a target motion information acquisition module, which is configured to obtain target motion information based on the video image corresponding to the image to be predicted; a target detection box determination module, which is configured to determine, the target detection box in the image to be predicted according to the target motion information.

In another embodiment of the present disclosure, wherein the target motion information is target motion speed, and wherein the target detection box determination module comprises: a motion detection box prediction module, which is configured to determine the target detection box in the image to be predicted according to the target motion speed and the target detection box in a previous image frame corresponding to the image to be predicted.

In another embodiment of the present disclosure, the pixel matching module comprises: a threshold determination module, which is configured to determine a maximum disparity threshold and a minimum disparity threshold of the pixel; a search region determination module, which is configured to determine a pixel search region in the second to-be-processed image according to the maximum disparity threshold and the minimum disparity threshold; a matching pixel determination module, which is configured to determine, based on the pixel in the first to-be-processed image and a pixel in the pixel search region, a matching pixel in the second to-be-processed image that matches the pixel.

In another embodiment of the present disclosure, wherein the first image is a current image frame of a first video image, the second image is a current image frame of a second video image, and wherein the threshold determination module comprises: a target attribute value acquisition module, which is configured to obtain the disparity value of the target in at least one pair of historical image frames of the first video image and the second video image; a disparity threshold calculation module, which is configured to determine the maximum disparity threshold and the minimum disparity threshold of the pixel according to the disparity value of the target in the at least one pair of historical image frames.

An image processing device may be provided, wherein the apparatus comprises a processor and a memory, the memory containing a set of instructions that, when executed by the processor, cause the image processing apparatus to perform an operation, the operation comprises: performing a target detection on a first image to generate a first to-be-processed image, the first to-be-processed image has a size smaller than the size of the first image; performing the target detection on a second image to generate a second to-be-processed image, the second to-be-processed image has a size smaller than the size of the second image, the first image and the second image constitute an image pair containing the target, and a disparity exists between the first image and second image; calculating, based on the first to-be-processed image and the second to-be-processed image, a disparity value of the target in the first to-be-processed image and the second to-be-processed image.

According to an aspect of the present disclosure, there is provided a computer-readable storage medium having stored thereon computer-readable instructions, the method as previously described is executed when the instructions executed by a computer.

The significance and benefits of the present disclosure will be clear from the following description of the embodiments. However, it should be understood that those embodiments are merely examples of how the disclosure can be implemented, and the meanings of the terms used to describe the disclosure are not limited to the specific ones in which they are used in the description of the embodiments.

Others systems, method, features and advantages of the disclosure will be, or will become, apparent to one with skill in the art upon examination of the following figures and detailed description.

BRIEF DESCRIPTION OF THE DRAWINGS

The disclosure can be better understood with reference to the flowing drawings and description. Moreover, in the figures, like reference numerals designate corresponding parts throughout the different views.

FIG.1 illustrates an exemplary flowchart of an image processing method 100 according to an embodiment of the present disclosure;

FIG. 2 illustrates an exemplary flowchart of the process 103 of calculating the disparity value of the target in the first to-be-processed image and the second to-be-processed image according to an embodiment of the present disclosure;

FIG. 3A illustrates an exemplary flowchart of the process 200 of generating the first to-be-processed image and generating the second to-be-processed image according to an embodiment of the present disclosure;

FIG. 3B illustrates a schematic diagram of a determined region to be processed according to an embodiment of the present disclosure;

FIG. 4 illustrates an exemplary flowchart of the process 400 of generating the target detection box of the image to be predicted according to an embodiment of the present disclosure;

FIG. 5 illustrates a schematic diagram of determining the target detection box in the image to be predicted according to the target motion information according to an embodiment of the present disclosure;

FIG. 6A illustrates an exemplary flowchart of the process S1031 of obtaining the matching pixel in the second to-be-processed image that matches the pixel of the target in the first to-be-processed image according to an embodiment of the present disclosure;

FIG. 6B illustrates a schematic diagram of determining a pixel search region in the second to-be-processed image according to the maximum disparity threshold and the minimum disparity threshold;

FIG. 6C illustrates another schematic diagram of determining a pixel search region in the second to-be-processed image according to the maximum disparity threshold and the minimum disparity threshold;

FIG. 7 illustrates an exemplary flowchart of process 700 of determining the maximum disparity threshold and the minimum disparity threshold of the pixel based on the first video image and the second video image according to an embodiment of the present disclosure;

FIG. 8A illustrates an exemplary flowchart of the process 1032 of calculating the disparity value between the pixel in the first to-be-processed image and the matching pixel thereof and generating the disparity image according to an embodiment of the present disclosure;

FIG. 8B illustrates a schematic diagram of the magnified disparity image according to the present disclosure;

FIG. 9 shows a structural block diagram of the image processing apparatus 900 according to an embodiment of the present disclosure;

FIG. 10 shows a structural block diagram of an image processing device 980 according to an embodiment of the present disclosure.

BRIEF DESCRIPTION OF THE PREFERRED EMBODIMENTS

Hereinafter the structure and concept of the present disclosure will be described more detailed with reference to the drawings. The details and examples are only provided to facilitate understanding of the present disclosure, and should not limit the present disclosure in any way.

Currently, when performing an image processing on an image pair (Such as a pair of images taken with a binocular camera) containing the same target to obtain the spatial coordinate value or attribute characteristics of the target, it usually involves the process of calculating the disparity value of the target in the image pair.

When calculating the disparity value of an image pair, ordinary methods includes: firstly, for each pixel in one image of the image pair, calculating the disparity value between the pixel and the matching pixel thereof in the other image of the image pair; and then, based on the calculated disparity value of each pixel, calculating the disparity value of the image pair.

However, this method is not only time-consuming but also unnecessary when only specific target on the image are concerned. In addition, this method has a large amount of calculation, which will cause a waste of computing resources.

To overcome at least some of the problems of above image processing method, the present disclosure provides an image processing method, in which on basis of achieving good disparity calculation, the calculation process can also be sped up. In addition, the time consumed by disparity calculation and the amount of calculation can be reduced significantly.

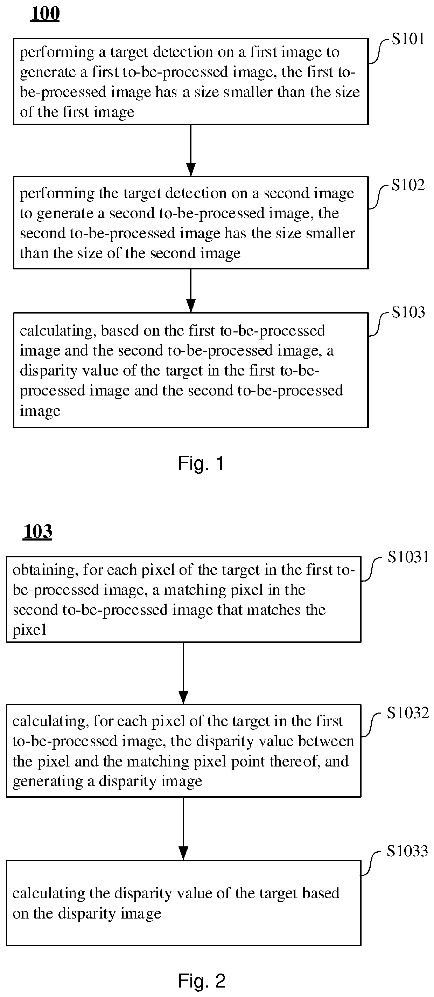

FIG. 1 illustrates a schematic diagram of an image processing method 100 according to an embodiment of the present disclosure.

As shown in FIG. 1, according to the image processing method 100, firstly, in step S101, a target detection is performed on a first image to generate a first to-be-processed image, and the first to-be-processed image has a size smaller than the size of the first image.

Then, in step S102, the target detection is performed on a second image to generate a second to-be-processed image, the second to-be-processed image has a size smaller than the size of the second image.

Wherein the first image and the second image constitute an image pair containing the target, and a disparity exists between the first image and second image.

In computer vision field, the disparity represents the vector-distance of pixel-level correspondences/matching pairs in an image pair. Specifically, for a single target pixel in an image of the image pair, the disparity of the target pixel means the vector-distance between the target pixel in one image of the image pair and the matching pixel of the target pixel in the other image of the image pair.

In some embodiments, the image pair (including the first image and the second image) may be a pair of images captured in real time by a camera or a video apparatus, for example, the image pair may be a pair of images output by a binocular camera or images taken by a monocular camera at different times and positions, or may be a pair of images including the same target taken by different cameras at different positions. What's more, the image pair may be a pair of images obtained after being processed in advance by a computer. **In** addition, the image pair may also be the output of a device with an image display or a potential image display function. The embodiment of the present disclosure is not limited by the source and acquisition method of the image pair.

In some embodiments, the target detection process may be achieved by pixel threshold comparison, for example, pixel values of pixels in the first image and the second image are compared with a preset pixel threshold, and a set of pixels having pixel values greater than the preset threshold is used as the target; or it may also be achieved by performing edge detection on the image to identify a target in the image, or it may also be implemented by a deep learning algorithm, such as a regional algorithm based on features of a convolutional neural network(R-CNN), a two-stage object detection algorithm such as Fast Region algorithm based on features of a convolutional neural network (Fast R-CNN). The embodiment of the present disclosure is not limited by the selected specific target detection method.

The target detection result may be represented by a target detection box or a coordinate vector, for example, for a target in an image, a rectangular region including the target and having the smallest area may be adopted as the target detection box, and the coordinates of four corner points of the target detection box is used to represent the target detection box.

However, according to an embodiment of the present disclosure, the target detection result may also be a circular or irregular closed shape that surrounds the target and has the smallest area, the embodiment of the present disclosure makes no limitation to the representing manner of the positioning result.

The image pair may include only one target, or the image pair may include multiple targets. The embodiment of the present disclosure makes no limitation to the number of targets in the image pair and the target types thereof.

The first to-be-processed image represents an image region of the first image used for disparity calculation, and the second to-be-processed image represents an image region of the second image used for disparity calculation. For example, the first to-be-processed image and the second to-be-processed image may have the same size. Embodiments of the present disclosure are not limited by the specific sizes of the first to-be-processed image and the second to-be-processed image.

It should be understood that operations of steps S101 and S102 may be performed in parallel, or performed sequentially, which is by no means limited herein.

After the first to-be-processed image and the second to-be-processed image are obtained, in step S103, a disparity value of the target in the first to-be-processed image and the second to-be-processed image is calculated.

Based on the foregoing, by performing the target detection on a first image and the second image to get first to-be-processed image and the second to-be-processed image which have a size smaller than the size of the initial first and second images, and further calculating the disparity value of the target based on the first and second to-be-processed images, the time consumed by the disparity calculation and the amount of calculation can be reduced significantly. Therefore, the calculation process of the disparity value of the target can be sped up.

In some embodiments, the above process S103 of calculating the disparity value of the target in the first to-be-processed image and the second to-be-processed image can be described more specifically. FIG. 2 illustrates an exemplary flowchart of the process 103 of calculating the disparity value of the target in the first to-be-processed image and the second to-be-processed image according to an embodiment of the present disclosure.

As shown in FIG. 2, first, in step S1031, for each pixel of the target in the first to-be-processed image, a matching pixel in the second to-be-processed image that matches the pixel is obtained. Embodiments of the present disclosure are not limited by a specific method of obtaining a matching pixel.

After the matching pixel for each pixel of the target in the first to-be-processed image is obtained, in step S1032, for each pixel of the target in the first to-be-processed image, the disparity value between the pixel and the matching pixel thereof is calculated, and a disparity image is generated.

For example, for each pixel of the target in the first to-be-processed image, the disparity value between the pixel and the matching pixel thereof may be calculated by computing the vector-distance between the pixel and the matching pixel thereof.

The disparity image represents an image representing the disparity value of each pixel in the first to-be-processed image. Specifically, the disparity image and the first to-be-processed image may have the same size, and the pixel value of each pixel in the disparity image may be the disparity value of the corresponding pixel in the first to-be-processed image.

Based on the disparity image, in step S1033, the disparity value of the target is calculated based on the disparity image.

For example, the target disparity value can be calculated by weighting the pixel values of multiple pixels of the target in the disparity image, or by randomly selecting target pixel from multiple pixels of the target in the disparity image and directly using the pixel values (i.e. disparity values) of the target pixel as the target disparity value. In addition, the target disparity value may also by calculated by preprocessing the disparity image to obtain the target cluster, and calculating the target disparity value based on the pixels included in the target cluster. Embodiments of the present disclosure are not limited by a specific method of obtaining a target disparity value based on the disparity image.

Based on the foregoing, by obtaining a matching pixel in the second to-be-processed image for each pixel of the target in the first to-be-processed image, and further calculating the disparity value of the pixel for each pixel of the target, the disparity image may be achieved. What's more, instead of processing every pixel in the whole image, by processing the pixels in the target, the time consumed by the disparity calculation and the amount of calculation can be reduced significantly.

In some embodiments, a first target detection box is obtained by performing the target detection on the first image, and a second target detection box is obtained by performing the target detection on the second image, and wherein the process of generating the first to-be-processed image and generating the second to-be-processed image can be described more specifically.

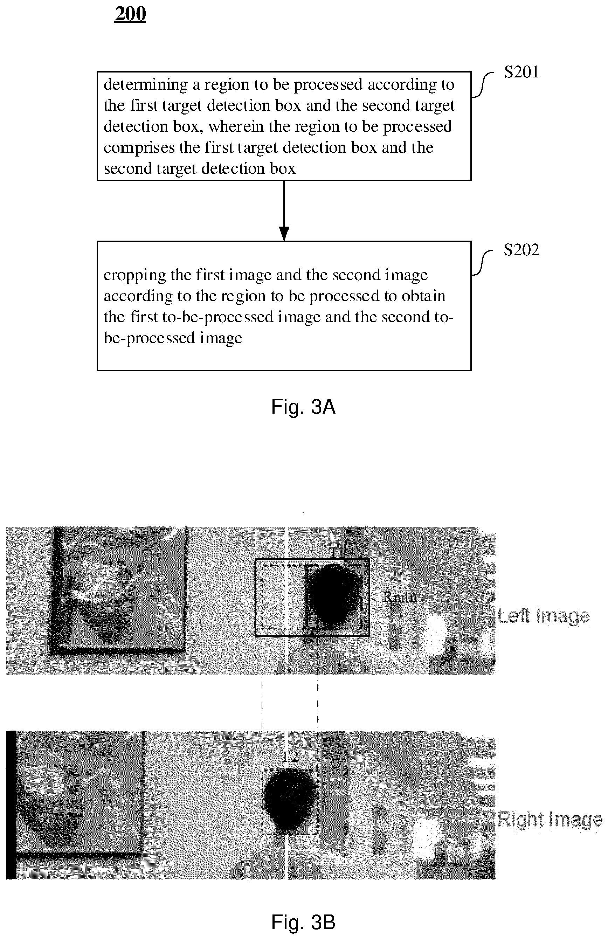

FIG. 3A illustrates an exemplary flowchart of the process 200 of generating the first to-be-processed image and generating the second to-be-processed image according to an embodiment of the present disclosure.

As shown in FIG. 3A, first, in step S201, a region to be processed is determined according to the first target detection box and the second target detection box, wherein the region to be processed comprises the first target detection box and the second target detection box.

The region to be processed represents an image region in the first image and the second image used for the disparity calculation. Embodiments of the present disclosure are not limited by the size and shape of the region to be processed.

FIG. 3B illustrates a schematic diagram of a determined region to be processed according to an embodiment of the present disclosure. Referring to FIG. 3B, the process of determining a region to be processed can be described more specifically.

In some embodiments, Referring to FIG. 3B, the target is the human head, the first image is the left image taken by a binocular camera, and the second image is the right image taken by the binocular camera. Then, based on the first target detection box T1 in the left image and the second target detection box T2 in the right image, the region to be processed Rt may be determined as a rectangular region Rmin (shown by a solid line box) which includes the first target detection box T1 and the second target detection box T2 and has the smallest area.

However, under other circumstance, the region to be processed Rt may be determined to be a region larger than the rectangular region Rmin for better calculation accuracy.

Based on the determined region to be processed, in the step S202, the first image and the second image are cropped according to the region to be processed to obtain the first to-be-processed image and the second to-be-processed image. Wherein the first to-be-processed image and the second to-be-processed have the same size.

Based on foregoing, according to the present disclosure, by determining the region to be processed based on the first target detection box and the second target detection box, and further cropping the first image and the second image based on the region to be processed, on the one hand, the accuracy of disparity calculation is improved by accurately locating the target position, and on the other hand, by cropping the image pair with the target detection results, the calculation amount is significantly reduced and the calculation speed has been increased.

In some embodiments, after the first to-be-processed image and the second to-be-processed image are obtained, the first to-be-processed image and the second to-be-processed image can be further scaled proportionally. For example, the first to-be-processed image and the second to-be-processed image may be reduced to two thirds of their current size to obtain a first reduced image and a second reduced image. Then, the target disparity value of the target is calculated based on the first reduced image and the second reduced image.

The present disclosure is not limited by the scale of reducing the first image and the second image, and the specific size of the first reduced image and the second reduced image.

By further reducing the first to-be-processed image and the second to-be-processed image, under the condition that the detection accuracy is basically maintained, the amount of calculation in the process of calculating the disparity value of the target can be further reduced, and the calculation speed can be improved, it is much easier to deploy the image processing method on devices with limited computing power. In addition, because of the scaling process, it is possible to adjust the first to-be-processed image and the second to-be-processed image to a fixed size, and then control the time consumption.

In some embodiments, the first image is a current image frame of a first video image, and the second image is a current image frame of a second video image. The first video image and the second video image may be the output of two cameras located at different positions.

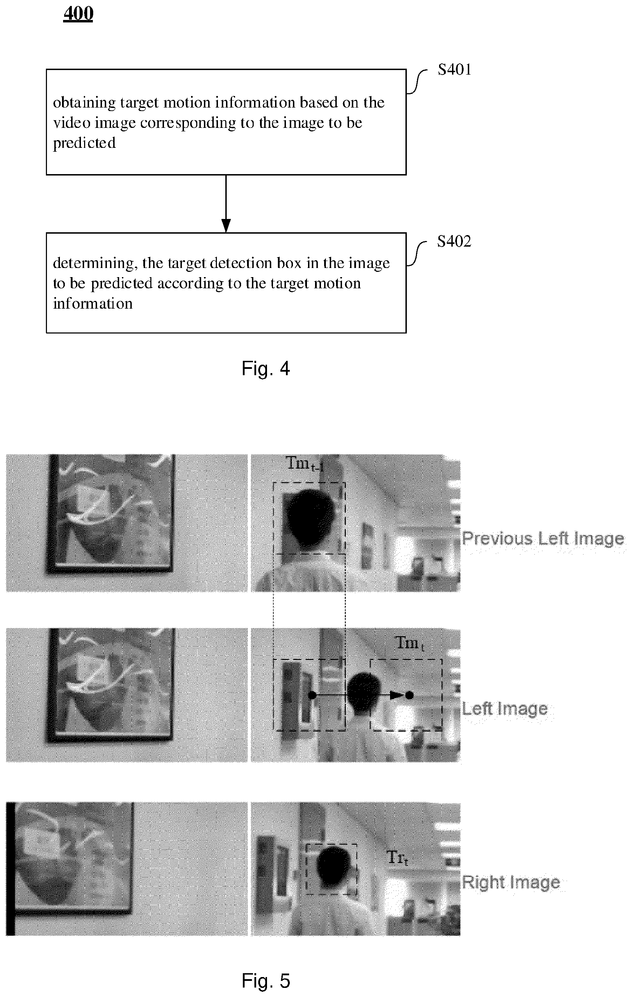

Under this circumstance, when the target is not detected in the first image or the second image, an image in which the target is not detected is considered as an image to be predicted. And the process of generating the target detection box of the image to be predicted can be described more specifically. FIG. 4 illustrates an exemplary flowchart of generating the target detection box of the image to be predicted 400 according to an embodiment of the present disclosure.

As shown in FIG. 4, first, in step S401, a target motion information is obtained based on the video image corresponding to the image to be predicted.

For example, the target motion information is the information represents the characteristics of target motion, which may include the target motion speed, the change trend of the disparity value of the target, and so on. Embodiments of the present disclosure are not limited by the content and the type of the target motion information.

After the target motion information is obtained, in step S402, the target detection box in the image to be predicted is determined according to the target motion information.

For example, the target detection box in the image to be predicted may be calculated based on the target motion speed and the position of the target detection box of the previous frame corresponding to the image to be predicted.

However, it should be understood that embodiments of the present disclosure are not limited by the specific method of determining the target detection box in the image to be predicted according to the target motion information.

Based on the foregoing, when the target is not detected in the first image or the second image, by using the method in the present disclosure, the target detection box can be generated by the target motion information of the video image corresponding to the image to be predicted, so that when the target is not detected in the first image or the second image, the image processing method still can perform the disparity calculation based on the generated target detection box in order to improve the calculation accuracy and enhance the robustness of the method.

In some embodiments, the target motion information is target motion speed, and the process of determining the target detection box in the image to be predicted according to the target motion information includes: determining the target detection box in the image to be predicted according to the target motion speed and the target detection box in a previous image frame corresponding to the image to be predicted.

The previous image frame corresponding to the image to be predicted represents the image frame previous to the current image frame. For example, if the current image frame is t, the previous image frame may be t-1.

The above process of determining the target detection box can be described more specifically. FIG. 5 illustrates a schematic diagram of determining the target detection box in the image to be predicted according to the target motion information according to an embodiment of the present disclosure.

As shown in FIG. 5, for example, the first image is the left image taken by a binocular camera, and the second image is the right image taken by the binocular camera, the target is the human head. For example, the target is detected in the right image and is not detected in the left image, so that the left image is considered as an image to be predicted Tm. Then, firstly, the motion speed may be calculated, for example, mt stands for current right image frame, previous k image frames are selected to estimate the target motion information, the previous k image frames represented by $m_{t-1}$, $m_{t-2}$, $m_{t-3}$, ..., $m_{t-k}$, then the average motion speed between $Tm_{t-1}$ and $Tm_{t-k}$ can be calculated. And the average motion speed may be used as the target motion speed Vs. Secondly, the position of the target detection box in the image to be predicted may be calculated according to the following formula:

$$Tm_t = Tm_{t-1} + Vs * \Delta t \hspace{3cm} 1)$$

where Tmt represents the center point position of the target detection box in the image to be predicted, $Tm_{t-1}$ represents the center point position of the target detection box in the previous image frame corresponding to the image to be predicted, Vs represents the target motion speed, and $\Delta t$ represents the timespan between adjacent frames.

Based on the foregoing, when the current target is not detected in the image, the target motion speed is calculated from the video image corresponding to the image, and the target detection box of the current image is determined by the target motion speed and the position of the target detection box of the previous image frame, so that the target detection box can be determined in an easy and convenient way.

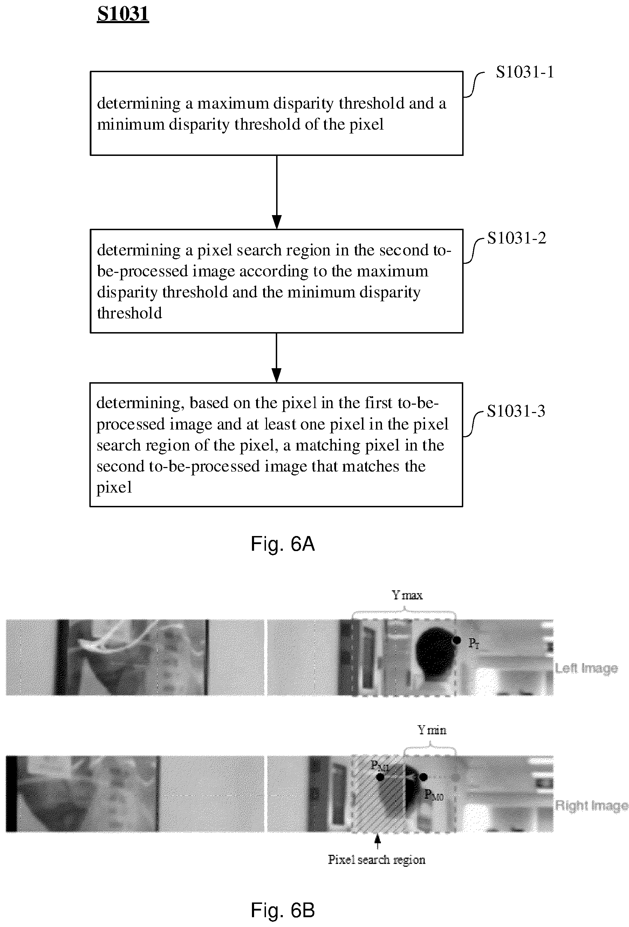

In some embodiments, the process of obtaining the matching pixel in the second to-be-processed image that matches the pixel in the first to-be-processed image can be described more specifically. FIG. 6A illustrates a schematic diagram of the process S1031 of obtaining the matching pixel in the second to-be-processed image that matches the pixel of the target in the first to-be-processed image according to an embodiment of the present disclosure.

As shown in FIG. 6A, firstly, in step S1031-1, a maximum disparity threshold and a minimum disparity threshold of the pixel are determined.

The maximum disparity threshold and the minimum disparity threshold are used to define the pixel search region in the second to-be-processed image. The maximum disparity threshold represents the preset maximum disparity value, and the minimum disparity threshold represents the preset minimum disparity value. The maximum disparity threshold and the minimum disparity threshold can be set based on actual needs, and embodiments of the present disclosure are not limited by the specific values of the maximum disparity threshold and the minimum disparity threshold.

The maximum disparity threshold and the minimum disparity threshold may be constant for all frames of the video image, or may be dynamically adjusted based on different image frames of the video image. The embodiments of the present disclosure are not limited by the way of setting the maximum disparity threshold and the minimum disparity threshold.

After the determination of the maximum disparity threshold and the minimum disparity threshold, in step S1031-2, a pixel search region is determined in the second to-be-processed image according to the maximum disparity threshold and the minimum disparity threshold.

The pixel search region represents the region in the second to-be-processed image used for searching the matching pixels of the pixels in the first to-be-processed image. Embodiments of the present disclosure are not limited by the manner of determining the pixel search region and the size of the pixel search region.

FIG. 6B illustrates a schematic diagram of determining a pixel search region in the second to-be-processed image according to the maximum disparity threshold and the minimum disparity threshold according to an embodiment of the present disclosure.

As shown in FIG. 6B, wherein the first image is the left image taken by a binocular camera, and the second image is the right image taken by the binocular camera, the target is the human head. The preset maximum disparity threshold $Y_{max}$ and a preset minimum disparity threshold $Y_{min}$ are marked in FIG. 6B, then a region extends between the preset maximum disparity threshold $Y_{max}$ and a preset minimum disparity threshold $Y_{min}$ can be determined as the pixel search region.

After the determination of the pixel search region, in step S1031-3, a matching pixel in the second to-be-processed image that matches the pixel is determined based on the pixel in the first to-be-processed image and at least one pixel in the pixel search region of the pixel.

Based on the foregoing, by determining a pixel search region in the second to-be-processed image based on the maximum disparity threshold and the minimum disparity threshold, when searching for a matching pixel for a pixel in the first to-be-processed image, only the pixels in the pixel search region in the second to-be-processed image need to be searched, which significantly reduces the calculation amount when performing pixel matching and increases the speed of matching pixels. At the same time, it is possible to further adjust the pixel search region by changing the maximum disparity threshold and the minimum disparity threshold in real time according to actual needs.

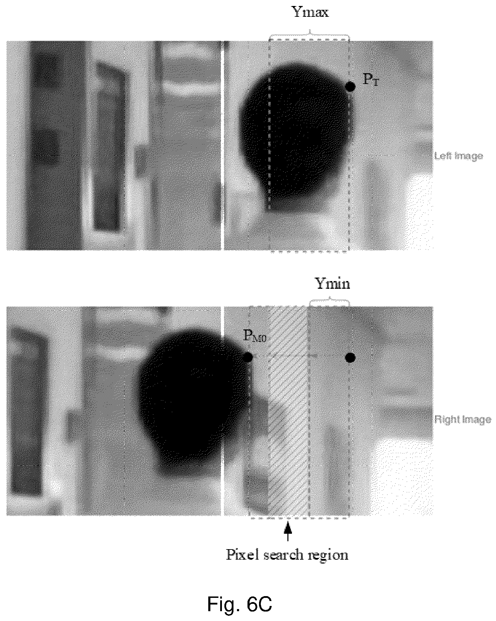

However, under different circumstances, the set of the minimum disparity threshold and the minimum disparity threshold may significantly affect the calculation accuracy. When the minimum disparity threshold is too big, as shown in FIG.6B, for the pixel $P_T$ in the left image, the method might possibly find a wrong matching pixel $P_{M1}$ rather than the desired matching pixel $P_{M0}$. Conversely, while the maximum disparity is too small, as shown in FIG.6C, it would also result in wrong matches. The correct matching pixel $P_{M0}$ for the pixel $P_T$ is outside of the pixel research region, and had never been calculated.

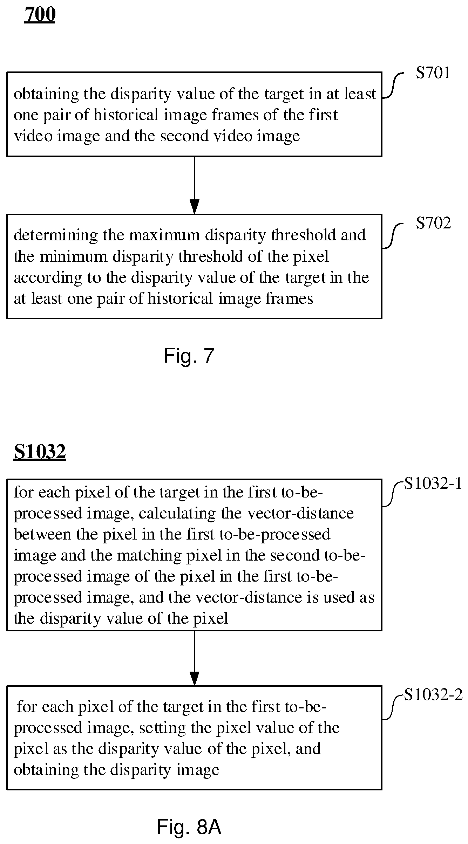

Based on the foregoing, in some embodiments, the first image is a current image frame of a first video image, the second image is a current image frame of a second video image, and the process of determining the maximum disparity threshold and the minimum disparity threshold of the pixel can be described more specifically. FIG. 7 illustrates an exemplary flowchart of process 700 of determining the maximum disparity threshold and the minimum disparity threshold of the pixel based on the first video image and the second video image according to an embodiment of the present disclosure.

As shown in FIG. 7, first, in step S701, the disparity value of the target is obtained in at least one pair of historical image frames of the first video image and the second video image.

The at least one pair of historical image frames of the first video image and the second video image represents at least one pair of historical image frames, and each pair of historical image frames in the at least one pair of historical image frames includes an image frame of the first video image and the corresponding image frame of the second video image.

For example, the disparity value of the target in at least one pair of historical image frames may be directly obtained, or the disparity value of the target in at least one pair of historical image frames can also be calculated according to the characteristics of the target in the historical image frames, such as its spatial coordinate values or depth information. The embodiments of the present disclosure are not limited by the specific acquisition manner of the disparity value of the target in at least one pair of historical image frames.

According to actual needs, different numbers of historical image frame pairs may be selected, for example, only one pair of historical image frames may be selected, or multiple pairs of historical image frames may be selected. Embodiments of the present disclosure are not limited to the specific number of the pairs of the historical image frames.

After the disparity values are obtained, in step S702, the maximum disparity threshold and the minimum disparity threshold of the pixel is determined according to the disparity value of the target in the at least one pair of historical image frames. Embodiments of the present disclosure are not limited by the specific method of determining the disparity value of the target.

Based on the foregoing, by determining the maximum disparity threshold and the minimum disparity threshold of the pixel according to the disparity value of the target in the at least one pair of historical image frames, the maximum disparity threshold and the minimum disparity threshold can be set more accurately and adjusted in real time based on the actual situation, so that the method may have better detection accuracy and robustness.

In some embodiments, for each pixel of the target in the first to-be-processed image, the process of calculating the disparity value between the pixel and the matching pixel thereof and generating the disparity image can be described more specifically.

FIG. 8A illustrates an exemplary flowchart of the process 1032 of calculating the disparity value between the pixel and the matching pixel thereof and generating the disparity image according to the present disclosure.

As shown in FIG. 8A, first, in step S1032-1, for each pixel of the target in the first to-be-processed image, the vector-distance between the pixel in the first to-be-processed image and the matching pixel in the second to-be-processed image of the pixel in the first to-be-processed image is calculated, and the vector-distance is used as the disparity value of the pixel.

The vector-distance between the pixel and the matching pixel of the pixel represents the spatial distance between the pixel and the matching pixel. When the first image and the second image are coplanar and their optical axes are parallel to each other, the vector-distance between the pixel and the matching pixel of the pixel may be the plane-distance between the pixel and the matching pixel.

Based on the disparity value of each pixel of the target, in step S1032-2, for each pixel of the target in the first to-be-processed image, the pixel value of the pixel is set as the disparity value of the pixel, and the disparity image is thus obtained.

Based on the foregoing, by calculating vector-distance between the pixel in the first to-be-processed image and the matching pixel in the second to-be-processed image of the pixel in the first to-be-processed image, and using the vector-distance as the disparity value of the pixel, and further setting the pixel value of the pixel as the disparity value of the pixel, the disparity image is obtained, , which can facilitate subsequent calculations of target disparity value.

In some embodiments, in order to better display the disparity value difference of different pixels, for example, the pixel value (i.e. disparity value) of each pixel in the disparity image is enlarged proportionally within a range of 0-255 to generate a magnified disparity image. Therefore, the disparity changes of pixels of the target can be shown in an intuitive and convenient way.

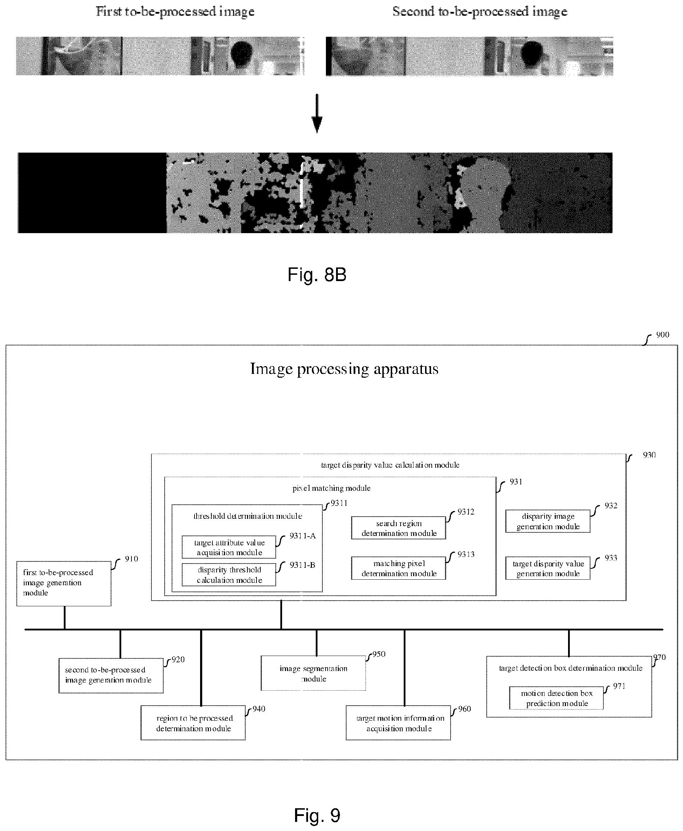

FIG. 8B illustrates a schematic diagram of the magnified disparity image according to the present disclosure. A light-colored pixel indicates that the disparity value of the pixel is large, and a dark-colored pixel indicates that the disparity value of the pixel is small.

In some embodiments, wherein calculating the disparity value of the target based on the disparity image includes: calculating the disparity value of the target based on the disparity image comprises: weighting and summing the pixel value of each pixel in the disparity image to obtain the disparity value of the target.

By weighting and summing the pixel value of each pixel in the disparity image to obtain the disparity value of the target, it is possible to reasonably assign the weight of each pixel in the target, for example, it is possible to assign a larger weight value to a pixel near the center point of the target, and to assign a smaller weight value to a pixel far from the center point of the target, thereby further improving calculation accuracy of the target disparity value. However, it should be understood that the embodiments of the present disclosure are not limited by the specific allocation manner of the weight value and the specific weight value of each pixel.

In some embodiments, the image processing method further includes the process of calculating a spatial coordinate value of the target according to the disparity value of the target in the first to-be-processed image and the second to-be-processed image.

By calculating the spatial coordinate value of the target according to the disparity value, the spatial feature of the target may be obtained and used for further analysis of the target.

In some embodiments, before the target detection on the first image and the second image, the image processing method further includes: through matrix transformation, the first image and the second image are projected on the same plane, and the optical axis of the first image and the optical axis of the second image are parallel to each other.

By performing image correction and preprocessing on the first image and the second image, making the first image and the second image to be projected on the same plane and the optical axis of the first image and the optical axis of the second image are parallel to each other, the method of the present disclosure may facilitate the subsequent calculation process of the parallax value, simplify the calculation amount, and further increase the calculation speed.

According to another aspect of the present disclosure, there is provided an image processing apparatus. FIG. 9 shows a structural block diagram of the image processing apparatus 900 according to an embodiment of the present disclosure.

As shown in the FIG. 9, the image processing apparatus 900 provided by the embodiment of the present disclosure includes: a first to-be-processed image generation module 910, a second to-be-processed image generation module 920 and a target disparity value calculation module 930, the image processing apparatus 900 can execute the method shown in FIG. 1.

The first to-be-processed image generation module 910 is configured to perform a target detection on a first image to generate a first to-be-processed image, the first to-be-processed image has a size smaller than the size of the first image.

The second to-be-processed image generation module 920 is configured to perform the target detection on a second image to generate a second to-be-processed image, the second to-be-processed image has the size smaller than the size of the second image, the first image and the second image constitute an image pair containing the target, and a disparity exists between the first image and second image.

In computer vision field, the disparity represents the vector-distance of pixel-level correspondences/matching pairs in an image pair.

In some embodiments, the image pair (including the first image and the second image) may be a pair of images captured in real time by a camera or a video apparatus, for example, the image pair may be a pair of images output by a binocular camera or images taken by a monocular camera at different times and positions, or may be a pair of images including the same target taken by different cameras at different positions. In addition, the image pair may also be the output of a device with an image display or a potential image display function.

In some embodiments, the target detection process may be achieved by pixel threshold comparison; or it may also be achieved by performing edge detection on the image to identify a target in the image. The embodiment of the present disclosure is not limited by the selected specific target detection method.

The target detection result may be represented by a target detection box or a coordinate vector, for example, for a target in an image, a rectangular region including the target and having the smallest area may be adopted as the target detection box, and the coordinates of four corner points of the target detection box is used to represent the target detection box. The embodiments of the present disclosure make no limitation to the representing manner of the positioning result.

The image pair may include only one target, or the image pair may include multiple targets. The embodiment of the present disclosure makes no limitation to the number of targets in the image pair and the target types thereof.

The target disparity value calculation module 930 is configured to calculate, based on the first to-be-processed image and the second to-be-processed image, a disparity value of the target in the first to-be-processed image and the second to-be-processed image.

The first to-be-processed image represents an image region of the first image used for disparity calculation, and the second to-be-processed image represents an image region of the second image used for disparity calculation. Embodiments of the present disclosure are not limited by the specific sizes of the first to-be-processed image and the second to-be-processed image.

Based on the foregoing, by performing the target detection on a first image and the second image to get first to-be-processed image and the second to-be-processed image which have a size smaller than the size of the initial first and second images, and further calculating the disparity value of the target based on the first and second to-be-processed images, the time consumed by the disparity calculation and the amount of calculation can be reduced significantly. Therefore, the calculation process of the disparity value of the target can be speed up.

In some embodiments, the target disparity value calculation module 930 includes a pixel matching module 931, a disparity image generation module 932 and a target disparity value generation module 933, which can perform the method described in FIG. 2.

The pixel matching module 931 is configured to perform the operation of the step S1031 in FIG. 2, obtaining, for each pixel of the target in the first to-be-processed image, a matching pixel in the second to-be-processed image that matches the pixel.

The matching pixel of a certain pixel of the target represents a pixel in the second to-be-processed image having the closest pixel feature to the pixel of the target in the first to-be-processed image. For example, the matching pixel of a certain pixel of the target may be obtained by Semi-Global Block Matching algorithm, or it may also be implemented by other algorithms, and the embodiments of the present disclosure are not limited by the specific manner of determining the matching pixel.

The disparity image generation module 932 is configured to perform the operation of the step S1032 in FIG. 2, calculating, for each pixel of the target in the first to-be-processed image, the disparity value between the pixel and the matching pixel point thereof, and generating a disparity image.

The target disparity value generation module 933 is configured to perform the operation of the step S1033 in FIG. 2, calculating the disparity value of the target based on the disparity image.

The disparity image represents an image representing the disparity value of each pixel in the first to-be-processed image. Specifically, the disparity image and the first to-be-processed image may have the same size, and the pixel value of each pixel in the disparity image may be the disparity value of the corresponding pixel in the first to-be-processed image.

Based on the foregoing, by obtaining a matching pixel in the second to-be-processed image for each pixel of the target in the first to-be-processed image, and further calculating the disparity value of the pixel for each pixel of the target, the disparity image may be achieved. What's more, instead of processing every pixel in the whole image, by processing the pixels in the target, the time consumed by the disparity calculation and the amount of calculation can be reduced significantly.

In some embodiments, wherein a first target detection box is obtained by performing the target detection on the first image, and a second target detection box is obtained by performing the target detection on the second image, and wherein the apparatus further comprises a region to be processed determination module 940 and an image segmentation module 950.

The region to be processed determination module 940 is configured to perform the operation of the step S201 in FIG. 3A, determining a region to be processed according to the first target detection box and the second target detection box, wherein the region to be processed comprises the first target detection box and the second target detection box.

The region to be processed represents an image region in the first image and the second image used for the disparity calculation. Embodiments of the present disclosure are not limited by the size and shape of the region to be processed.

The image segmentation module 950 is configured to perform the operation of the step S202 in FIG. 3A, cropping the first image and the second image according to the region to be processed to obtain the first to-be-processed image and the second to-be-processed image.

Based on foregoing, according to the present disclosure, by determining the region to be processed based on the first target detection box and the second target detection box, and further cropping the first image and the second image based on the region to be processed, on the one hand, the accuracy of disparity calculation is improved by accurately locating the target position, and on the other hand, by cropping the image pair with the target detection results, the calculation amount is significantly reduced and the calculation speed has been increased.

In some embodiments, the first image is a current image frame of a first video image, and the second image is a current image frame of a second video image, when the target is not detected in the first image or the second image, an image in which the target is not detected is used as an image to be predicted, and the apparatus further comprises a target motion information acquisition module 960 and a target detection box determination module 970.

The target motion information acquisition module 960 is configured to perform the operation of the step S401 in FIG. 4, obtaining target motion information based on the video image corresponding to the image to be predicted.

For example, the target motion information may be the information represents the characteristics of target motion, which may include the target motion speed, the change trend of the disparity value of the target, and so on. Embodiments of the present disclosure are not limited by the content and the type of the target motion information.

The target detection box determination module 970 is configured to perform the operation of the step S402 in FIG. 4, determining, the target detection box in the image to be predicted according to the target motion information.

For example, the target detection box in the image to be predicted may be calculated based on the target motion speed and the position of the target detection box of the previous frame corresponding to the image to be predicted. However, it should be understood that embodiments of the present disclosure are not limited by the specific method of determining the target detection box in the image to be predicted according to the target motion information.

Based on the foregoing, when the target is not detected in the first image or the second image, by using the method in the present disclosure, the target detection box can be generated by the target motion information of the video image corresponding to the image to be predicted, so that when the target is not detected in the first image or the second image, the image processing method still can perform the disparity calculation based on the generated target detection box in order to improve the calculation accuracy and enhance the robustness of the method.

In some embodiments, wherein the target motion information is target motion speed, and wherein the target detection box determination module 970 comprises a motion detection box prediction module 971. The motion detection box prediction module 971 is configured to determine the target detection box in the image to be predicted according to the target motion speed and the target detection box in a previous image frame corresponding to the image to be predicted.

Based on the foregoing, when the target is not detected in the image, the target motion speed is calculated from the video image corresponding to the image, and the target detection box of the current image is determined by the target motion speed and the position of the target detection box of the previous image frame, so that the target detection box can be determined in an easy and convenient way.

In some embodiments, wherein the pixel matching module 931 comprises a threshold determination module 9311, a search region determination module 9312, and a matching pixel determination module 9313.

The threshold determination module 9311 is configured to perform the operation of the step S1031-1 in FIG. 6A, determining a maximum disparity threshold and a minimum disparity threshold of the pixel.

The search region determination module 9312 is configured to perform the operation of the step S1031-2 in FIG. 6A, determining a pixel search region in the second to-be-processed image according to the maximum disparity threshold and the minimum disparity threshold.

The matching pixel determination module 9313 is configured to perform the operation of the step S1031-3 in FIG. 6A, determining, based on the pixel in the first to-be-processed image and a pixel in the pixel search region, a matching pixel in the second to-be-processed image that matches the pixel.

Wherein the maximum disparity threshold and the minimum disparity threshold are used to define the pixel search region in the in the second to-be-processed image. The maximum disparity threshold represents the preset maximum disparity value, and the minimum disparity threshold represents the preset minimum disparity value. The maximum disparity threshold and the minimum disparity threshold can be set based on actual needs, and embodiments of the present disclosure are not limited by the specific values of the maximum disparity threshold and the minimum disparity threshold.

The maximum disparity threshold and the minimum disparity threshold may be constant for all frames of the video image, or may be dynamically adjusted based on different image frames of the video image. The embodiments of the present disclosure are not limited by the way of setting the maximum disparity threshold and the minimum disparity threshold.

The pixel search region represents the region in the second to-be-processed image used for searching the matching pixels of the pixels in the first to-be-processed image. Embodiments of the present disclosure are not limited by the manner of determining the pixel search region and the size of the pixel search region.

For each pixel, its matching pixel may be determined by Semi-Global Block Matching algorithm, or it may also be implemented by other algorithms, and the embodiments of the present disclosure are not limited by the specific manner of determining the matching pixel.

Based on the foregoing, by determining a pixel search region in the second to-be-processed image based on the maximum disparity threshold and the minimum disparity, when searching for a matching pixel for a pixel in the first to-be-processed image, only the pixels in the pixel search region in the second to-be-processed image need to be searched, which significantly reduces the calculation amount when performing pixel matching and increases the speed of matching pixels. At the same time, it may further adjust the pixel search region by changing the maximum disparity threshold and the minimum disparity in real time according to actual needs.

In some embodiments, wherein the first image is a current image frame of a first video image, the second image is a current image frame of a second video image, and wherein the threshold determination module 9311 comprises: a target attribute value acquisition module 9311-A and a disparity threshold calculation module 9311-B.

The target attribute value acquisition module 9311-A is configured to perform the operation of the step S701 in FIG. 7, obtaining the disparity value of the target in at least one pair of historical image frames of the first video image and the second video image.

The disparity threshold calculation module 9311-B is configured to perform the operation of the step S702 in FIG. 7, determining the maximum disparity threshold and the minimum disparity threshold of the pixel according to the disparity value of the target in the at least one pair of historical image frames.

The at least one pair of historical image frames of the first video image and the second video image represents at least one pair of historical image frames, and each pair of historical image frames in the at least one pair of historical image frames includes an image frame of the first video image and the corresponding image frame of the second video image.

According to actual needs, different numbers of historical image frame pairs may be selected, for example, only one pair of historical image frames may be selected, or multiple pairs of historical image frames may be selected. Embodiments of the present disclosure are not limited to the specific number of the pairs of the historical image frames.

Based on the foregoing, by determining the maximum disparity threshold and the minimum disparity threshold of the pixel according to the disparity value of the target in the at least one pair of historical image frames, the maximum disparity threshold and the minimum disparity threshold can be set more accurately and adjusted in real time based on the actual situation, so that the method may have better detection accuracy and robustness.

In some embodiments, the image processing device may execute the method as described above, and implement the functions described above.

According to another aspect of the present disclosure, there is further provided an image processing device 980.

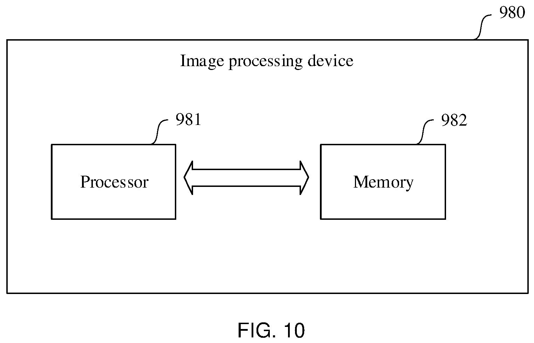

The image processing device 980 as shown in FIG. 10 may be implemented as one or more dedicated or general-purpose computer system modules or components, such as a personal computer, a notebook computer, a tablet computer, a mobile phone, a personal digital assistance (PDA), and any smart portable device. The image detection device 980 may include at least one processor 981 and a memory 982.

The memory containing a set of instructions that, when executed by the processor, cause the image processing device to perform an operation, the operation comprises: performing a target detection on a first image to generate a first to-be-processed image, the first to-be-processed image has a size smaller than the size of the first image; performing the target detection on a second image to generate a second to-be-processed image, the second to-be-processed image has the size smaller than the size of the second image, the first image and the second image constitute an image pair containing the target, and a disparity exists between the first image and second image; calculating, based on the first to-be-processed image and the second to-be-processed image, a disparity value of the target in the first to-be-processed image and the second to-be-processed image. The at least one processor is configured to execute program instructions.

In some embodiments, the image processing device 980 can receive images from camera external to the image processing device 980, and perform the image processing method described above on the received image data to implement the functions of the image processing device described above.

According to another aspect of the present disclosure, there is also provided a non-volatile computer-readable storage medium having stored thereon computer-readable instructions that, when executed by a computer, perform the method as described above.

Program portions of the technology may be considered to be "product" or "article" that exists in the form of executable codes and/or related data, which are embodied or implemented by a computer-readable medium. A tangible, permanent storage medium may include an internal memory or a storage used by any computers, processors, or similar devices or associated modules. For example, various semiconductor memories, tape drivers, disk drivers, or any similar devices capable of providing storage functionality for software.

All software or parts of it may sometimes communicate over a network, such as the internet or other communication networks. Such communication can load software from one computer device or processor to another. For example, loading from one server or host computer to a hardware environment of one computer environment, or other computer environment implementing the system, or a system having a similar function associated with providing information needed for image processing. Therefore, another medium capable of transmitting software elements can also be used as a physical connection between local devices, such as light waves, electric waves, electromagnetic waves, etc., to be propagated through cables, optical cables, or air. Physical medium used for carrying the waves such as cables, wireless connections, or fiber optic cables can also be considered as medium for carrying the software. In usage herein, unless a tangible "storage" medium is defined, other terms referring to a computer or machine "readable medium" mean a medium that participates in execution of any instruction by the processor.

While various embodiments of the disclosure have been described, it will be apparent to those of ordinary skill in the art that many more embodiments and implementations are possible that are within the scope of the disclosure. Accordingly, the disclosure is not to be restricted except in light of the attached claims.

**Claims**

1. An image processing method, comprising:

   performing a target detection on a first image to generate a first to-be-processed image, the first to-be-processed image has a size smaller than the size of the first image;
   performing the target detection on a second image to generate a second to-be-processed image, the second to-be-processed image has a size smaller than the size of the second image, the first image and the second image constitute an image pair containing the target, and a disparity exists between the first image and second image;
   calculating, based on the first to-be-processed image and the second to-be-processed image, a disparity value of the target in the first to-be-processed image and the second to-be-processed image,

   wherein a first target detection box is obtained by performing the target detection on the first image, and a second target detection box is obtained by performing the target detection on the second image, and wherein generating the first to-be-processed image and generating the second to-be-processed image comprising:

   determining a region to be processed according to the first target detection box and the second target detection box, wherein the region to be processed comprises the first target detection box and the second target detection box;
   cropping the first image and the second image according to the region to be processed to obtain the first to-be-processed image and the second to-be-processed image.

2. The image processing method according to claim 1, wherein calculating the disparity value of the target in the first to-be-processed image and the second to-be-processed image comprises:

   obtaining, for each pixel of the target in the first to-be-processed image, a matching pixel in the second to-be-processed image that matches the pixel;
   calculating, for each pixel of the target in the first to-be-processed image, the disparity value between the pixel and the matching pixel thereof, and generating a disparity image;
   calculating the disparity value of the target based on the disparity image.

3. The image processing method according to claim 1, wherein the first image is a current image frame of a first video image, and the second image is a current image frame of a second video image,
   when the target is not detected in the first image or the second image, an image in which the target is not detected is used as an image to be predicted, and the process of generating the target detection box of the image to be predicted comprising:

   obtaining target motion information based on the video image corresponding to the image to be predicted;
   determining, the target detection box in the image to be predicted according to the target motion information.

4. The image processing method according to claim 3, wherein the target motion information is target motion speed, and wherein determining the target detection box in the image to be predicted according to the target motion information comprises:
   determining the target detection box in the image to be predicted according to the target motion speed and the target detection box in a previous image frame corresponding to the image to be predicted.

5. The image processing method according to claim 2, wherein, obtaining, for each pixel of the target in the first to-be-processed image, the matching pixel in the second to-be-processed image that matches the pixel comprises:

determining a maximum disparity threshold and a minimum disparity threshold of the pixel;
determining a pixel search region in the second to-be-processed image according to the maximum disparity threshold and the minimum disparity threshold;
determining, based on the pixel in the first to-be-processed image and a pixel in the pixel search region, the matching pixel in the second to-be-processed image that matches the pixel.

6. The image processing method according to claim 5, wherein the first image is a current image frame of a first video image, the second image is a current image frame of a second video image, and wherein determining the maximum disparity threshold and the minimum disparity threshold of the pixel comprises:

obtaining the disparity value of the target in at least one pair of historical image frames of the first video image and the second video image;
determining the maximum disparity threshold and the minimum disparity threshold of the pixel according to the disparity value of the target in the at least one pair of historical image frames.

7. The image processing method according to claim 2, wherein calculating, for each pixel of the target in the first to-be-processed image, the disparity value between the pixel and the matching pixel thereof, and generating the disparity image comprises:

for each pixel of the target in the first to-be-processed image,
calculating vector-distance between the pixel in the first to-be-processed image and the matching pixel in the second to-be-processed image of the pixel in the first to-be-processed image, and using the vector-distance as the disparity value of the pixel;
setting the pixel value of the pixel as the disparity value of the pixel, and obtaining the disparity image.

8. The image processing method according to claim 7, wherein calculating the disparity value of the target based on the disparity image comprises: weighting and summing the pixel value of each pixel in the disparity image to obtain the disparity value of the target.

9. The image processing method according to claim 1, further comprising: calculating a spatial coordinate value of the target according to the disparity value of the target in the first to-be-processed image and the second to-be-processed image.

10. An image processing apparatus, comprising:

a first to-be-processed image generation module, which is configured to perform a target detection on a first image to generate a first to-be-processed image, the first to-be-processed image has a size smaller than the size of the first image;
a second to-be-processed image generation module, which is configured to perform the target detection on a second image to generate a second to-be-processed image, the second to-be-processed image has a size smaller than the size of the second image, the first image and the second image constitute an image pair containing the target, and a disparity exists between the first image and second image;
a target disparity value calculation module configured to calculate, based on the first to-be-processed image and the second to-be-processed image, a disparity value of the target in the first to-be-processed image and the second to-be-processed image,

wherein a first target detection box is obtained by performing the target detection on the first image, and a second target detection box is obtained by performing the target detection on the second image, and wherein the apparatus further comprises:

a region to be processed determination module, which is configured to determine a region to be processed according to the first target detection box and the second target detection box, wherein the region to be processed comprises the first target detection box and the second target detection box;
an image segmentation module, which is configured to crop the first image and the second image according to the region to be processed to obtain the first to-be-processed image and the second to-be-processed image.

11. The image processing apparatus according to claim 10, wherein the target disparity value calculation module comprises:

a pixel matching module, which is configured to obtain, for each pixel of the target in the first to-be-processed image, a matching pixel in the second to-be-processed image that matches the pixel;
a disparity image generation module, which is configured to calculate, for each pixel of the target in the first to-be-processed image, the disparity value between the pixel and the matching pixel point thereof, and generating a disparity image;
a target disparity value generation module, which is configured to calculate the disparity value of the target based on the disparity image.

12. A computer-readable storage medium, **characterized in that** computer-readable instructions are stored thereon, and when the instructions are executed by a computer, the method according to any one of claims 1-9 is executed.

**Patentansprüche**

1. Bildverarbeitungsverfahren, umfassend:

Durchführen einer Zielerkennung an einem ersten Bild, um ein erstes zu verarbeitendes Bild zu erzeugen, wobei das erste zu verarbeitende Bild eine Größe aufweist, die kleiner ist als die Größe des ersten Bildes;
Durchführen der Zielerkennung auf einem zweiten Bild, um ein zweites zu verarbeitendes Bild zu erzeugen, wobei das zweite zu verarbeitende Bild eine Größe aufweist, die kleiner ist als die Größe des zweiten Bildes, wobei das erste Bild und das zweite Bild ein Bildpaar bilden, das das Ziel enthält, und wobei zwischen dem ersten Bild und dem zweiten Bild eine Disparität existiert;
Berechnen eines Disparitätswerts des Ziels im ersten zu verarbeitenden Bild und im zweiten zu verarbeitenden Bild basierend auf dem ersten zu verarbeitenden Bild und dem zweiten zu verarbeitenden Bild, wobei ein erstes Zielerfassungsfeld durch Durchführen der Zielerkennung an dem ersten Bild erhalten wird, und ein zweites Zielerkennungsfeld wird erhalten, indem die Zielerkennung auf dem zweiten Bild durchgeführt wird, und wobei das Erzeugen des ersten zu verarbeitenden Bildes und das Erzeugen des zweiten zu verarbeitenden Bildes Folgendes umfasst:

Bestimmen eines zu verarbeitenden Bereichs entsprechend dem ersten Zielerkennungsfeld und dem zweiten Zielerkennungsfeld, wobei der zu verarbeitende Bereich das erste Zielerkennungsfeld und das zweite Zielerkennungsfeld umfasst;
Zuschneiden des ersten Bildes und des zweiten Bildes entsprechend der Region, die zu verarbeiten ist, um das erste zu verarbeitende Bild und das zweite zu verarbeitende Bild zu erhalten.

2. Bildverarbeitungsverfahren nach Anspruch 1, wobei das Berechnen des Disparitätswerts des Ziels im ersten zu verarbeitenden Bild und im zweiten zu verarbeitenden Bild Folgendes umfasst:

Erhalten eines passenden Pixels im zweiten zu verarbeitenden Bild für jedes Pixel des Ziels im ersten zu verarbeitenden Bild, das mit dem Pixel übereinstimmt;
Berechnen des Disparitätswertes zwischen dem Pixel und dem übereinstimmenden Pixel für jedes Pixel des Ziels im ersten zu verarbeitenden Bild und Erzeugen eines Disparitätsbildes;
Berechnen des Disparitätswertes des Ziels basierend auf dem Disparitätsbild.

3. Bildverarbeitungsverfahren nach Anspruch 1, wobei das erste Bild ein aktueller Bildrahmen eines ersten Videobildes ist und das zweite Bild ein aktueller Bildrahmen eines zweiten Videobildes ist, wobei, wenn das Ziel in dem ersten Bild oder dem zweiten Bild nicht erkannt wird, ein Bild, in dem das Ziel nicht erkannt wird, als vorherzusagendes Bild verwendet wird, und der Prozess des Erzeugens des Zielerkennungsfeldes des vorherzusagenden Bildes Folgendes umfasst:

Erhalten von Zielbewegungsinformationen basierend auf dem Videobild, das dem vorherzusagenden Bild entspricht;
Bestimmen des Zielerkennungsfeldes in dem vorherzusagenden Bild entsprechend den Zielbewegungsinformationen.

4. Bildverarbeitungsverfahren nach Anspruch 3, wobei die Zielbewegungsinformation die Zielbewegungsgeschwindigkeit ist und wobei das Bestimmen des Zielerkennungsfeldes in dem vorherzusagenden Bild entsprechend der Zielbewegungsinformation Folgendes umfasst:
Bestimmen des Zielerkennungsfeldes in dem vorherzusagenden Bild entsprechend der Zielbewegungsgeschwindigkeit und des Zielerkennungsfeldes in einem vorherigen Bildrahmen, der dem vorherzusagenden Bild entspricht.

5. Bildverarbeitungsverfahren nach Anspruch 2, wobei das Erhalten des übereinstimmenden Pixels in dem zweiten zu verarbeitenden Bild, das mit dem Pixel übereinstimmt, für jedes Pixel des Ziels in dem ersten zu verarbeitenden Bild Folgendes umfasst:

Bestimmen eines maximalen Disparitätsschwellenwerts und eines minimalen Disparitätsschwellenwerts des Pixels;
Bestimmen eines Pixelsuchbereichs in dem zweiten zu verarbeitenden Bild entsprechend dem maximalen Disparitätsschwellenwert und dem minimalen Disparitätsschwellenwert;
Bestimmen des übereinstimmenden Pixels in dem zweiten zu verarbeitenden Bild, das mit dem Pixel übereinstimmt, basierend auf dem Pixel in dem ersten zu verarbeitenden Bild und einem Pixel in dem Pixelsuchbereich.

6. Bildverarbeitungsverfahren nach Anspruch 5, wobei das erste Bild ein aktueller Bildrahmen eines ersten Videobildes ist, das zweite Bild ein aktueller Bildrahmen eines zweiten Videobildes ist und wobei das Bestimmen des maximalen Disparitätsschwellenwerts und des minimalen Disparitätsschwellenwerts des Pixels Folgendes umfasst:

Erhalten des Disparitätswerts des Ziels in mindestens einem Paar historischer Bildrahmen des ersten Videobildes und des zweiten Videobildes;
Bestimmen des maximalen Disparitätsschwellenwerts und des minimalen Disparitätsschwellenwerts des Pixels entsprechend dem Disparitätswert des Ziels in dem mindestens einen Paar historischer Bildrahmen.

7. Bildverarbeitungsverfahren nach Anspruch 2, wobei das Berechnen des Disparitätswerts zwischen dem Pixel und dem übereinstimmenden Pixel für jedes Pixel des Ziels im ersten zu verarbeitenden Bild und das Erzeugen des Disparitätsbilds Folgendes umfasst:

für jedes Pixel des Ziels im ersten zu verarbeitenden Bild,
Berechnen des Vektorabstands zwischen dem Pixel im ersten zu verarbeitenden Bild und dem übereinstimmenden Pixel im zweiten zu verarbeitenden Bild des Pixels im ersten zu verarbeitenden Bild und unter Verwendung des Vektorabstands als Disparitätswert des Pixels;
Einstellen des Pixelwerts des Pixels als Disparitätswert des Pixels und Erhalten des Disparitätsbildes.

8. Bildverarbeitungsverfahren nach Anspruch 7, wobei das Berechnen des Disparitätswerts des Ziels basierend auf dem Disparitätsbild Folgendes umfasst: Gewichten und Summieren des Pixelwerts jedes Pixels im Disparitätsbild, um den Disparitätswert des Ziels zu erhalten.

9. Bildverarbeitungsverfahren nach Anspruch 1, ferner umfassend: Berechnen einer Raumkoordinate des Ziels entsprechend dem Disparitätswert des Ziels im ersten zu verarbeitenden Bild und im zweiten zu verarbeitenden Bild.

10. Bildverarbeitungsvorrichtung, umfassend:

ein erstes zu verarbeitendes Bilderzeugungsmodul, das dazu konfiguriert ist, eine Zielerkennung an einem ersten Bild durchzuführen, um ein erstes zu verarbeitendes Bild zu erzeugen, wobei das erste zu verarbeitende Bild eine Größe aufweist, die kleiner ist als die Größe des ersten Bildes;
ein zweites zu verarbeitendes Bilderzeugungsmodul, das dazu konfiguriert ist, die Zielerkennung auf einem zweiten Bild durchzuführen, um ein zweites zu verarbeitendes Bild zu erzeugen, wobei das zweite zu verarbeitende Bild eine Größe aufweist, die kleiner ist als die Größe des zweiten Bildes, wobei das erste Bild und das zweite Bild ein Bildpaar bilden, das das Ziel enthält, und wobei zwischen dem ersten Bild und dem zweiten Bild eine Disparität existiert;
ein Modul zur Berechnung des Ziel-Disparitätswerts, das dazu konfiguriert ist, basierend auf dem ersten zu verarbeitenden Bild und dem zweiten zu verarbeitenden Bild einen Disparitätswert des Ziels im ersten zu verarbeitenden Bild und im zweiten zu verarbeitenden Bild zu berechnen,
wobei ein erstes Zielerkennungsfeld durch Durchführen der Zielerkennung auf dem ersten Bild erhalten wird, und ein zweites Zielerkennungsfeld durch Durchführen der Zielerkennung auf dem zweiten Bild erhalten wird, und wobei die Vorrichtung ferner Folgendes umfasst:

ein Modul zur Bestimmung des zu verarbeitenden Bereichs, das dazu konfiguriert ist, einen zu verarbeitenden Bereich entsprechend dem ersten Zielerkennungsfeld und dem zweiten Zielerkennungsfeld zu bestimmen, wobei der zu verarbeitende Bereich das erste Zielerkennungsfeld und das zweite Zielerkennungsfeld umfasst;

ein Bildsegmentierungsmodul, das dazu konfiguriert ist, das erste Bild und das zweite Bild entsprechend dem zu verarbeitenden Bereich zuzuschneiden, um das erste zu verarbeitende Bild und das zweite zu verarbeitende Bild zu erhalten.

11. Bildverarbeitungsvorrichtung nach Anspruch 10, wobei das Modul zur Berechnung des Ziel-Disparitätswerts Folgendes umfasst:

ein Pixel-Übereinstimmungsmodul, das dazu konfiguriert ist, für jedes Pixel des Ziels im ersten zu verarbeitenden Bild ein übereinstimmendes Pixel im zweiten zu verarbeitenden Bild zu erhalten, das mit dem Pixel übereinstimmt;

ein Disparitätsbild-Erzeugungsmodul, das dazu konfiguriert ist, für jedes Pixel des Ziels im ersten zu verarbeitenden Bild den Disparitätswert zwischen dem Pixel und dem entsprechenden Pixelpunkt zu berechnen und ein Disparitätsbild zu erzeugen;

ein Ziel-Disparitätswert-Erzeugungsmodul, das dazu konfiguriert ist, den Disparitätswert des Ziels basierend auf dem Disparitätsbild zu berechnen.

12. Computerlesbares Speichermedium, **dadurch gekennzeichnet, dass** darauf computerlesbare Anweisungen gespeichert sind und dass, wenn die Anweisungen von einem Computer ausgeführt werden, das Verfahren gemäß einem der Ansprüche 1-9 ausgeführt wird.

**Revendications**

1. Procédé de traitement d'image, comprenant :

la réalisation d'une détection de cible sur une première image pour générer une première image à traiter, la première image à traiter a une taille inférieure à la taille de la première image ;
la réalisation de la détection de cible sur une seconde image pour générer une seconde image à traiter, la seconde image à traiter a une taille inférieure à la taille de la seconde image, la première image et la seconde image constituent une paire d'images contenant la cible, et une disparité existe entre la première image et la seconde image ;
le calcul, sur la base de la première image à traiter et de la seconde image à traiter, d'une valeur de disparité de la cible dans la première image à traiter et la seconde image à traiter, dans lequel une première boîte de détection de cible est obtenue en réalisation la détection de cible sur la première image, et une seconde boîte de détection de cible est obtenue en réalisant la détection de cible sur la seconde image, et dans lequel la génération de la première image à traiter et la génération de la seconde image à traiter comprenant :

la détermination d'une région à traiter selon la première boîte de détection de cible et de la seconde boîte de détection de cible, dans lequel la région à traiter comprend la première boîte de détection de cible et la seconde boîte de détection de cible ;
le recadrage de la première image et la seconde image selon la région à traiter pour obtenir la première image à traiter et la seconde image à traiter.

2. Procédé de traitement d'image selon la revendication 1, dans lequel le calcul de la valeur de disparité de la cible dans la première image à traiter et la seconde image à traiter comprend :

l'obtention, pour chaque pixel de la cible dans la première image à traiter, d'un pixel correspondant dans la seconde image à traiter qui correspond au pixel ;
le calcul, pour chaque pixel de la cible dans la première image à traiter, de la valeur de disparité entre le pixel et le pixel correspondant, et la génération d'une image de disparité ;
le calcul de la valeur de disparité de cible à partir de l'image de disparité.

**3.** Procédé de traitement d'image selon la revendication 1, dans lequel la première image est une trame d'image courante d'une première image vidéo, et la seconde image est une trame d'image courante d'une seconde image vidéo,

lorsque la cible n'est pas détectée dans la première ou la seconde image, une image dans laquelle la cible n'est pas détectée est utilisée comme image à prédire, et le processus de génération du boîtier de détection de cible de l'image à prédire comprenant :

l'obtention d'informations de mouvement de cible sur la base de l'image vidéo correspondant à l'image à prédire ;
la détermination du boîtier de détection de cible dans l'image à prédire selon les informations de mouvement de cible.

**4.** Procédé de traitement d'image selon la revendication 3, dans lequel les informations de mouvement de cible sont une vitesse de déplacement, et dans lequel la détermination du boîtier de détection de cible dans l'image à prédire selon les informations de mouvement de cible comprend :

la détermination du boîtier de détection de cible dans l'image à prédire selon la vitesse de déplacement de cible et du boîtier de détection de cible dans une trame d'image précédente correspondant à l'image à prédire.

**5.** Procédé de traitement d'image selon la revendication 2, dans lequel l'obtention, pour chaque pixel de la cible dans la première image à traiter, d'un pixel correspondant dans la seconde image à traiter qui correspond au pixel comprend :

la détermination d'un seuil de disparité maximal et un seuil de disparité minimal du pixel ;
la détermination d'une région de recherche de pixels dans la seconde image à traiter selon le seuil de disparité maximal et le seuil de disparité minimal ;
la détermination, sur la base du pixel de la première image à traiter et d'un pixel de la région de recherche de pixels, du pixel correspondant dans la seconde image à traiter qui correspond au pixel.

**6.** Procédé de traitement d'image selon la revendication 5, dans lequel la première image est une trame d'image courante d'une première image vidéo, la seconde image est une trame d'image courante d'une seconde image vidéo, et dans lequel la détermination du seuil de disparité maximal et du seuil de disparité minimal comprend :

l'obtention de la valeur de disparité de la cible dans au moins une paire de trames d'images historiques de la première image vidéo et de la seconde image vidéo ;
la détermination du seuil de disparité maximal et du seuil de disparité minimal du pixel selon la valeur de disparité de la cible dans l'au moins une paire de trames d'images historiques.

**7.** Procédé de traitement d'image selon la revendication 2, dans lequel le calcul, pour chaque pixel de la cible dans la première image à traiter, de la valeur de disparité entre le pixel et le pixel correspondant, et la génération de l'image de disparité comprend :

pour chaque pixel de la cible dans la première image à traiter,
le calcul de la distance vectorielle entre le pixel dans la première image à traiter et le pixel correspondant dans la seconde image à traiter du pixel dans la première image à traiter, et l'utilisation de la distance vectorielle comme valeur de disparité du pixel ;
la définition de la valeur de pixel du pixel comme valeur de disparité du pixel, et l'obtention de l'image de disparité.

**8.** Procédé de traitement d'image selon la revendication 7, dans lequel le calcul de la valeur de disparité de la cible sur la base de l'image de disparité comprend : la pondération et la somme de la valeur de pixel de chaque pixel dans l'image de disparité pour obtenir la valeur de disparité de la cible.

**9.** Procédé de traitement d'image selon la revendication 1, comprenant également : le calcul d'une valeur de coordonnées spatiales de la cible selon la valeur de disparité de la cible dans la première image à traiter et la seconde image à traiter.

**10.** Appareil de traitement d'image, comprenant :

un premier module de génération d'image à traiter, qui est configuré pour réaliser une détection de cible sur une première image pour générer une première image à traiter, la première image à traiter a une taille inférieure à la taille de la première image ;

un second module de génération d'image à traiter, qui est configuré pour réaliser la détection de cible sur une seconde image pour générer une seconde image à traiter, la seconde image à traiter a une taille inférieure à la taille de la seconde image, la première image et la seconde image constituent une paire d'images contenant la cible, et une disparité existe entre la première image et la seconde image ;

un module de calcul de valeur de disparité de cible configuré pour calculer, sur la base de la première image à traiter et de la seconde image à traiter, une valeur de disparité de cible dans la première image à traiter et la seconde image à traiter, dans lequel une première boîte de détection de cible est obtenue en réalisation la détection de cible sur la première image, et une seconde boîte de détection de cible est obtenue en réalisant la détection de cible sur la seconde image, et dans lequel l'appareil comprend également :

un module de détermination d'une région à traiter, qui est configuré pour déterminer une région à traiter selon la première boîte de détection de cible et de la seconde boîte de détection de cible, dans lequel la région à traiter comprend la première boîte de détection de cible et la seconde boîte de détection de cible ;

un module de segmentation d'image, qui est configuré pour recadrer la première image et la seconde image selon la région à traiter pour obtenir la première image à traiter et la seconde image à traiter.

11. Appareil de traitement d'image selon la revendication 10, dans lequel le module de calcul de la valeur de disparité cible comprend :

un module de pixel correspondant, qui est configuré pour obtenir, pour chaque pixel de la cible dans la première image à traiter, un pixel correspondant dans la seconde image à traiter qui correspond au pixel ;

un module de génération d'image de disparité, qui est configuré pour calculer, pour chaque pixel de la cible dans la première image à traiter, la valeur de disparité entre le pixel et le point de pixel correspondant, et la génération d'une image de disparité ;

un module de génération de valeur de disparité cible, qui est configuré pour calculer la valeur de disparité de la cible sur la base de l'image de disparité.

12. Support de stockage lisible par ordinateur, **caractérisé en ce que** des instructions lisibles par ordinateur y sont stockées, et lorsque les instructions sont exécutées par un ordinateur, le procédé selon l'une quelconque des revendications 1 à 9 est exécuté.

**100**

performing a target detection on a first image to generate a first to-be-processed image, the first to-be-processed image has a size smaller than the size of the first image ⟋S101

performing the target detection on a second image to generate a second to-be-processed image, the second to-be-processed image has the size smaller than the size of the second image ⟋S102

calculating, based on the first to-be-processed image and the second to-be-processed image, a disparity value of the target in the first to-be-processed image and the second to-be-processed image ⟋S103

Fig. 1

**103**

obtaining, for each pixel of the target in the first to-be-processed image, a matching pixel in the second to-be-processed image that matches the pixel ⟋S1031

calculating, for each pixel of the target in the first to-be-processed image, the disparity value between the pixel and the matching pixel point thereof, and generating a disparity image ⟋S1032

calculating the disparity value of the target based on the disparity image ⟋S1033

Fig. 2

**200**

determining a region to be processed according to the first target detection box and the second target detection box, wherein the region to be processed comprises the first target detection box and the second target detection box    ⟩ S201

cropping the first image and the second image according to the region to be processed to obtain the first to-be-processed image and the second to-be-processed image    ⟩ S202

Fig. 3A

Fig. 3B

**400**

| |
|---|
| obtaining target motion information based on the video image corresponding to the image to be predicted |

S401

↓

| |
|---|
| determining, the target detection box in the image to be predicted according to the target motion information |

S402

Fig. 4

Fig. 5

## S1031

determining a maximum disparity threshold and a minimum disparity threshold of the pixel — S1031-1

↓

determining a pixel search region in the second to-be-processed image according to the maximum disparity threshold and the minimum disparity threshold — S1031-2

↓

determining, based on the pixel in the first to-be-processed image and at least one pixel in the pixel search region of the pixel, a matching pixel in the second to-be-processed image that matches the pixel — S1031-3

Fig. 6A

Fig. 6B

Fig. 6C

**700**

obtaining the disparity value of the target in at least
one pair of historical image frames of the first
video image and the second video image $\qquad$ S701

determining the maximum disparity threshold and
the minimum disparity threshold of the pixel
according to the disparity value of the target in the
at least one pair of historical image frames $\qquad$ S702

Fig. 7

**S1032**

for each pixel of the target in the first to-be-
processed image, calculating the vector-distance
between the pixel in the first to-be-processed
image and the matching pixel in the second to-be-
processed image of the pixel in the first to-be-
processed image, and the vector-distance is used as
the disparity value of the pixel $\qquad$ S1032-1

for each pixel of the target in the first to-be-
processed image, setting the pixel value of the
pixel as the disparity value of the pixel, and
obtaining the disparity image $\qquad$ S1032-2

Fig. 8A

First to-be-processed image     Second to-be-processed image

Fig. 8B

900

## Image processing apparatus

930

target disparity value calculation module

931

pixel matching module

9311

threshold determination module

9311-A

target attribute value acquisition module

9311-B

disparity threshold calculation module

9312

search region determination module

9313

matching pixel determination module

932

disparity image generation module

933

target disparity value generation module

910

first to-be-processed image generation module

920

second to-be-processed image generation module

940

region to be processed determination module

950

image segmentation module

960

target motion information acquisition module

970

target detection box determination module

971

motion detection box prediction module

Fig. 9

980

Image processing device

981

Processor

982

Memory

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019206073 A1

- US 2015262365 A1